# EUROPEAN PATENT APPLICATION

(11) **EP 3 068 153 A1**
(43) Date of publication of application: **14.09.2016**
(21) Application number: 14860189.1
(22) Date of filing: 07.11.2014
(51) Int. Cl.: H04W 12/04, H04W 72/04, H04W 92/20

(54) **MOBILE COMMUNICATION METHOD**

(30) Priority: 08.11.2013 JP 2013232205
(71) Applicant: NTT DOCOMO, INC., Chiyoda-ku Tokyo 100-6150 (JP)
(72) Inventor: HAPSARI, Wuri Andarmawanti, Tokyo 100-6150 (JP); UCHINO, Tooru, Tokyo 100-6150 (JP); TAKAHASHI, Hideaki, Tokyo 100-6150 (JP); ZUGENMAIER, Alf, Munich (DE)
(74) Representative: Hoffmann Eitle
(86) International application number: PCT/JP2014/079568
(87) International publication number: WO 2015/068799

(57) **Abstract**

To protect a key (K_eNB-int) and a key (K_eNB-enc) that are used in a radio base station (MeNB), even when a malicious third party has stolen a key (K_SeNB) from a radio base station (SeNB). A mobile communication method according to the present invention includes, upon starting "Inter-eNB CA" configured such that downlink data is distributed to the radio base station (MeNB) and the radio base station (SeNB) by a serving gateway device (S-GW), generating, by the radio base station (MeNB), the key (K_SeNB) based on a key (KeNB) and transmitting the key (K_SeNB) to the radio base station (SeNB), and generating, by the radio base station (SeNB), a key (K_SeNB-enc) and a key (K_SeNB-int) used for communication with a mobile station (UE) in the "Inter-eNB CA", based on the key (K_SeNB).

## Description

### TECHNICAL FIELD

The present invention relates to a mobile communication method.

### BACKGROUND ART

Presently, in 3GPP, architectures to be implemented by using SCE (Small Cell Enhancement) are being discussed.

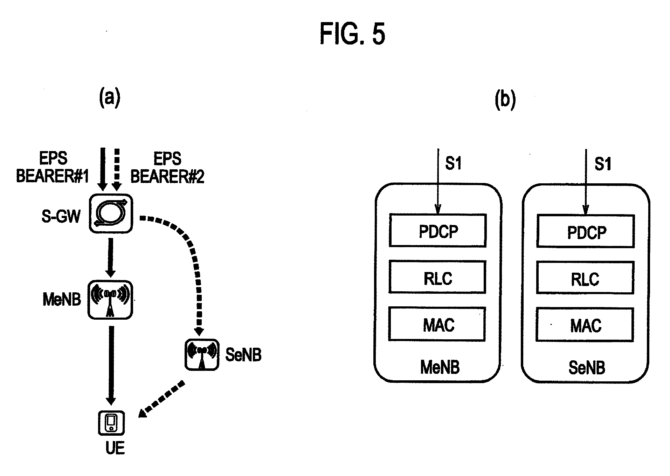

In future, a detailed study regarding an architecture shown in FIG. 5(a) will be undertaken.

In this architecture, as shown in FIG. 5(a), a serving gateway device S-GW routes a downlink signal addressed to a mobile station UE to one of a radio base station MeNB (Master eNB) and a radio base station SeNB (Secondary eNB).

In this architecture, as shown in FIG. 5(b), each of the radio base station MeNB and the radio base station SeNB includes PDCP (Packet Data Convergence Protocol) layer function.

Moreover, in this architecture, plural radio base stations MeNB and SeNB transmit the downlink signal to a single mobile station UE.

A technology in which the radio base station MeNB generates, in "Key derivation" in which a key required to perform a security process is generated in the radio base stations MeNB and SeNB, a key K_SeNB based on a key KeNB. Then, the radio base stations MeNB and SeNB generate, using the key K_SeNB, a key K_eNB-int and a key K_eNB-enc that are used for communication with the mobile station UE, is known in the art (for example, see Non-Patent Document 1).

### PRIOR ART DOCUMENT

### NON-PATENT DOCUMENT

Non-Patent Document 1: 3GPP Contribution R2-131671

### SUMMARY OF THE INVENTION

However, in the technology explained above, the radio base stations MeNB and SeNB use the same key K_SeNB. Therefore, there was a problem that when a malicious third party has stolen the key K_SeNB from the radio base station SeNB, that party could have the information about the key K_eNB-int and the key K_eNB-enc that are used in the radio base station MeNB.

The present invention has been made in view of the above circumstances. It is an object of the present invention to provide a mobile communication method capable of protecting, even when a malicious third party has stolen the key K_SeNB from the radio base station SeNB, the key K_eNB-int and the key K_eNB-enc that are used in the radio base station MeNB.

According to a first aspect of the present embodiment, a mobile communication method includes, upon starting a carrier aggregation configured such that downlink data is distributed to a master radio base station and a secondary radio base station by a serving gateway device, generating, by the master radio base station, a base key for secondary radio base station based on a base key, and transmitting the base key for secondary radio base station to the secondary radio base station, and generating, by the secondary radio base station, a communication key that is used for communication with a mobile station in the carrier aggregation, based on the base key for secondary radio base station.

According to a second aspect of the present embodiment, a mobile communication method includes, upon starting a carrier aggregation configured such that downlink data is distributed to a master radio base station and a secondary radio base station by a serving gateway device, generating, by the master radio base station, a base key for secondary radio base station based on a parameter received from a mobility management node, and transmitting the base key for secondary radio base station to the secondary radio base station, and generating, by the secondary radio base station, a communication key that is used for communication with a mobile station in the carrier aggregation, based on the base key for secondary radio base station.

### BRIEF DESCRIPTION OF DRAWINGS

FIG. 1 is an overall schematic diagram of a mobile communication system according to a first embodiment of the present invention.
FIG. 2 is a sequence diagram for explaining an operation of the mobile communication system according to the first embodiment of the present invention.
FIG. 3 is an overall schematic diagram of a mobile communication system according to a second embodiment of the present invention.
FIG. 4 is a sequence diagram for explaining an operation of the mobile communication system according to the second embodiment of the present invention.
FIG. 5 is a view for explaining a conventional technology.

### MODES FOR CARRYING OUT THE INVENTION

### (Mobile Communication System According to First Embodiment of Present Invention)

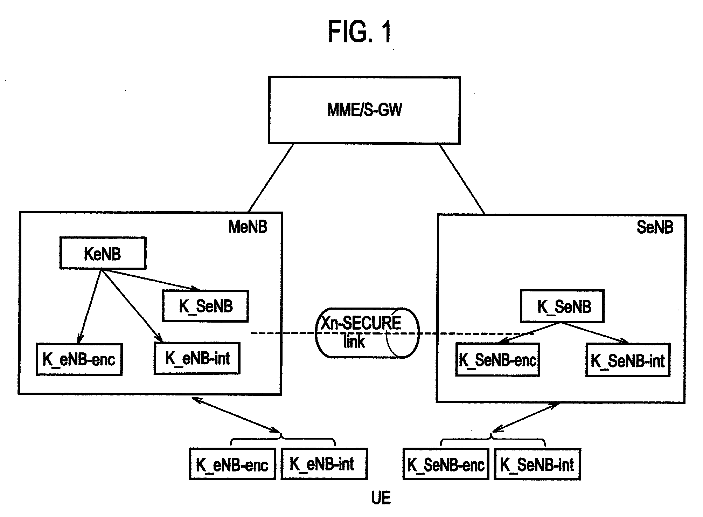

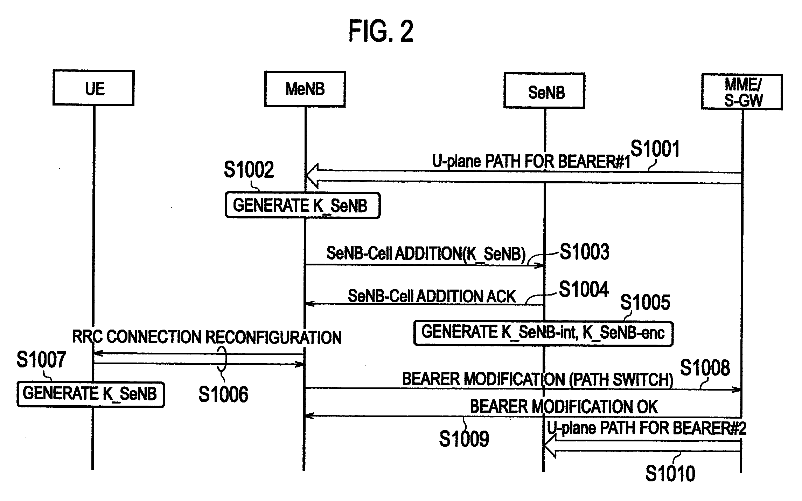

Referring to FIGS. 1 and 2, a mobile communication system according to a first embodiment of the present invention will be explained below.

The mobile communication system according to the present embodiment is a mobile communication system of the LTE system (or, LTE-Advanced system), and includes, as shown in FIG. 1, a mobility management node MME (Mobility Management Entity), a serving gateway device S-GW, a radio base station MeNB, and a radio base station SeNB.

As shown in FIG. 1, the radio base station MeNB is capable of generating a key K_SeNB, a key K_eNB-enc, and a key K_eNB-int based on a key KeNB.

The key K_eNB-enc is a key that is used in Encription process between the radio base station MeNB and a mobile station UE. The key K_eNB-int is a key that is used in Integrity-protection process between the radio base station MeNB and the mobile station UE.

The radio base station MeNB transmits the generated key K_SeNB to the radio base station SeNB via a secure link.

The radio base station SeNB generates a key K_SeNB-enc and a key K_SeNB-int from the received key K_SeNB.

The key K_SeNB-enc is a key that is used in the Encription process between the radio base station SeNB and the mobile station UE. The key K_SeNB-int is a key that is used in the Integrity-protection process between the radio base station SeNB and the mobile station UE.

The mobile station UE retains the key K_eNB-enc, the key K_eNB-int, the key K_SeNB-enc, and the key K_SeNB-int.

In the mobile communication system according to the present embodiment, because the key K_eNB-enc, the key K_eNB-int, the key K_SeNB-enc, and the key K_SeNB-int are derived from the same key KeNB, when the mobile station UE is handed over from a cell under the control of the radio base station MeNB to a cell under the control of the radio base station SeNB, the key K_eNB-enc, the key K_eNB-int, the key K_SeNB-enc, and the key K_SeNB-int can be modified.

Referring to FIG. 2, an example of the concrete operation of the mobile communication system according to the present embodiment will be explained below.

As shown in FIG. 2, when the mobility management node MME sets U-plane path for EPS bearer #1 that reaches the mobile station UE via the radio base station MeNB at Step S1001, the radio base station MeNB generates the key K_SeNB based on the key KeNB at Step S1002.

At Step S1003, by transmitting "SeNB-Cell addition" message, the radio base station MeNB notifies the radio base station SeNB of the key K_SeNB.

At Step S1004, the radio base station SeNB transmits "SeNB-Cell addition ACK" message to the radio base station MeNB, and generates the key K_SeNB-enc and the key K_SeNB-int based on the key K_SeNB at Step S1005.

At Step S1006, the radio base station MeNB performs "RRC Connection Reconfiguration" process on the mobile station UE.

At Step S1007, the mobile station UE generates the key K_SeNB, the key K_eNB-enc, and the key K_eNB-int based on the key KeNB, and generates the key K_SeNB-enc and the key K_SeNB-int, based on the key K_SeNB.

At Step S1008, the radio base station MeNB transmits "Bearer Modification (Path switch)" message to the mobility management node MME and then, at Step S1009, the mobility management node MME transmits "Bearer Modification OK" to the radio base station MeNB.

At Step S1010, the mobility management node MME sets U-plane path for EPS bearer #2 that reaches the mobile station UE via the radio base station SeNB.

The mobile communication system according to the present embodiment is capable of generating, without the involvement of the mobility management node MME, the key K_SeNB-enc and the key K_SeNB-int that are used in a security process in the radio base station SeNB.

Moreover, in the mobile communication system according to the present embodiment, even when a malicious third party has stolen the key K_SeNB from the radio base station SeNB, the key K_eNB-int and the key K_eNB-enc that are used in the radio base station MeNB can be protected.

### (Mobile Communication System According to Second Embodiment of Present Invention)

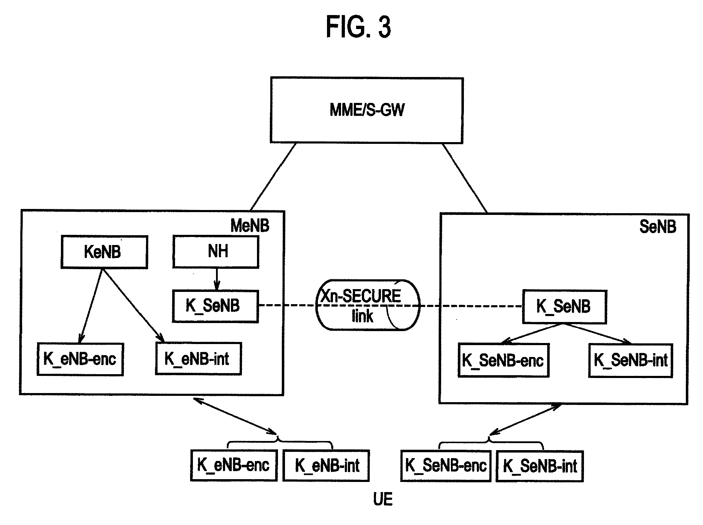

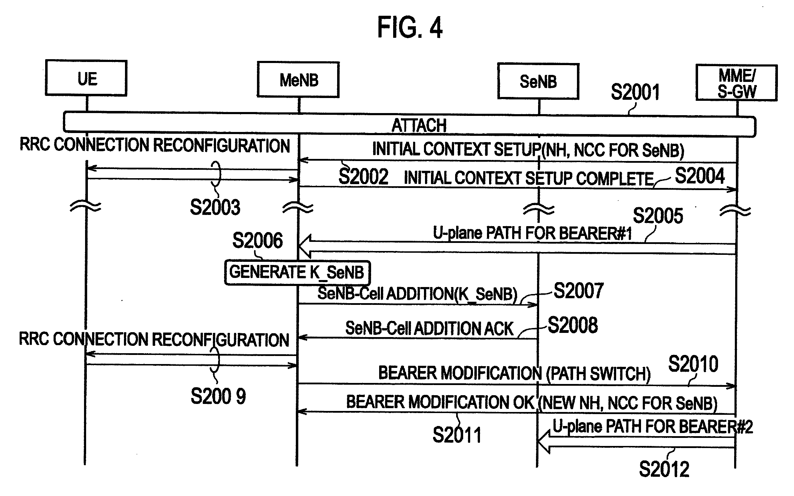

Referring to FIGS. 3 and 4, a mobile communication system according to a second embodiment of the present invention will be explained below while focusing on the points of difference with the mobile communication system according to the first embodiment.

As shown in FIG. 3, the radio base station MeNB generates the key K_SeNB based on a parameter NH that is acquired from the mobility management node MME, and generates the key K_eNB-enc and the key K_eNB-int based on the key KeNB.

Moreover, the radio base station MeNB transmits the generated key K_SeNB to the radio base station SeNB via the secure link.

The radio base station SeNB generates the key K_SeNB-enc and the key K_SeNB-int based on the received key K_SeNB.

The mobile station UE retains the key K_eNB-enc, the key K_eNB-int, the key K_SeNB-enc, and the key K_SeNB-int.

In the mobile communication system according to the present embodiment, the key K_eNB-enc and the key K_eNB-int are generated based on the key KeNB, and the key K_SeNB-enc and the key K_SeNB-int are generated based on the key K_SeNB that is generated based on the parameter NH. Therefore, even when the mobile station UE is handed over from the cell under the control of the radio base station MeNB to the cell under the control of the radio base station SeNB, there is no need to modify the key K_eNB-enc, the key K_eNB-int, the key K_SeNB-enc, and the key K_SeNB-int.

However, in the mobile communication system according to the present embodiment, even when the mobile station UE is handed over from the cell under the control of the radio base station MeNB to the cell under the control of the radio base station SeNB, the key K_eNB-enc, the key K_eNB-int, the key K_SeNB-enc, and the key K_SeNB-int can be modified.

Referring to FIG. 4, an example of the concrete operation of the mobile communication system according to the present embodiment will be explained below.

As shown in FIG. 4, upon performing Attach procedure of the mobile station UE at Step S2001, the mobility management node MME transmits, at Step S2002, to the radio base station MeNB, "Initial Context Setup" that includes the parameter NH and "NCC for SeNB".

At Step S2003, the radio base station MeNB performs the "RRC Connection Reconfiguration" process on the mobile station UE.

At Step S2004, the radio base station MeNB transmits "Initial Context Setup Complete" to the mobility management node MME.

At Step S2005, the mobility management node MME sets the U-plane path for the EPS bearer #1 that reaches the mobile station UE via the radio base station MeNB.

At Step S2006, the radio base station MeNB generates the key K_SeNB based on the parameter NH.

At Step S2007, by transmitting "SeNB-Cell addition" message, the radio base station MeNB notifies the radio base station SeNB of the key K_SeNB.

The radio base station SeNB, at Step S2008, transmits the "SeNB-Cell addition ACK" message to the radio base station MeNB and generates the key K_SeNB-enc and the key K_SeNB-int based on the key K_SeNB.

At Step S2009, the radio base station MeNB performs the "RRC Connection Reconfiguration" process on the mobile station UE.

The mobile station UE generates the key K_eNB-enc and the key K_eNB-int based on the key KeNB, generates the key K_SeNB based on the parameter NH, and generates the key K_SeNB-enc and the key K_SeNB-int based on the key K_SeNB.

The radio base station MeNB, at Step S2010, transmits the "Bearer Modification (Path switch)" message to the mobility management node MME, and then the mobility management node MME, at Step S2011, transmits to the radio base station MeNB the "Bearer Modification OK" that includes the "NCC for SeNB" and a new NH.

At Step S2012, the mobility management node MME sets the U-plane path for the EPS bearer #2 that reaches the mobile station UE via the radio base station SeNB.

In the mobile communication system according to the present embodiment, even when a malicious third party has stolen the key K_SeNB from the radio base station SeNB, the key K_eNB-int and the key K_eNB-enc that are used in the radio base station MeNB can be protected.

In the mobile communication system according to the present embodiment, even when the mobile station UE is handed over from the cell under the control of the radio base station MeNB to the cell under the control of the radio base station SeNB, there is no need to modify the key K_eNB-enc, the key K_eNB-int, the key K_SeNB-enc, and the key K_SeNB-int.

The characteristics of the present embodiments explained above can be expressed as follows.

According to a first aspect of the present embodiment, a mobile communication method includes, upon starting "Inter-eNB CA (carrier aggregation) " configured such that downlink data is distributed to a radio base station MeNB (master radio base station) and a radio base station SeNB (secondary radio base station) by a serving gateway device S-GW, generating, by the radio base station MeNB, a key K_SeNB (a base key for secondary radio base station) based on a key KeNB (base key), and transmitting the key K_SeNB to the radio base station SeNB, and generating, by the radio base station SeNB, a key K_SeNB-enc and a key K_SeNB-int (communication keys) that are used for communication with a mobile station UE in the "Inter-eNB CA" based on the key K_SeNB.

According to a second aspect of the present embodiment, a mobile communication method includes, upon starting the "Inter-eNB CA" configured such that downlink data is distributed to a radio base station MeNB and a radio base station SeNB by a serving gateway device S-eNB, generating, by the radio base station MeNB, a key K_SeNB based on a parameter NH received from a mobility management node MME, and transmitting the key K_SeNB to the radio base station SeNB, and generating, by the radio base station SeNB, a key K_SeNB-enc and a key K_SeNB-int that are used for communication with a mobile station UE in the "Inter-eNB CA" based on the key K_SeNB.

The operations of the mobile station UE, the radio base stations MeNB and SeNB, the mobility management node MME, and the serving gateway device S-GW can be realized by hardware, can be realized by a software module executed by a processor, or can be realized by the combination of these.

The software module can be arranged in a storage medium having a desired form such as RAM (Random Access Memory), a flash memory, ROM (Read Only Memory), EPROM (Erasable Programmable ROM), EEPROM (Electronically Erasable and Programmable ROM), a register, a hard disk, a removable disk, CD-ROM, and the like.

The storage medium is connected to a processor so that the processor can read / write information from / in the storage medium. Alternatively, the storage medium can be integrated in a processor. Alternatively, the storage medium and the processor can be arranged in ASIC. The ASIC can be arranged in the mobile station UE, the radio base stations MeNB and SeNB, the mobility management node MME, and the serving gateway device S-GW. The storage medium and the processor can be arranged as a discrete component in the mobile station UE, the radio base stations MeNB and SeNB, the mobility management node MME, and the serving gateway device S-GW.

The present invention has been explained in detail by using the above mentioned embodiments; however, it is obvious for a person skilled in the art that the present invention is not limited to the embodiments explained in the present description. The present invention can be implemented by way of modifications and changes without deviating from the gist and the range of the present invention specified by the claims. Accordingly, the indication of the present description aims at exemplary explanation, and has no intention to limit to the present invention.

The entire contents of Japanese Patent Application 2013-232205 (filed on November 8, 2013) are incorporated in the description of the present application by reference.

### INDUSTRIAL APPLICABILITY

According to the present invention, as explained above, it is possible to provide a mobile communication method capable of protecting, even when a malicious third party has stolen a key K_SeNB from a radio base station SeNB, a key K_eNB-int and a key K_eNB-enc that are used in a radio base station MeNB.

### EXPLANATION OF REFERENCE NUMERALS

- UE: Mobile station
- MeNB, SeNB: Radio base station
- MME: Mobility management node
- S-GW: Serving gateway device

## Claims

1. A mobile communication method comprising:
upon starting a carrier aggregation configured such that downlink data is distributed to a master radio base station and a secondary radio base station by a serving gateway device,
generating, by the master radio base station, a base key for secondary radio base station based on a base key, and transmitting the base key for secondary radio base station to the secondary radio base station; and
generating, by the secondary radio base station, a communication key that is used for communication with a mobile station in the carrier aggregation, based on the base key for secondary radio base station.

2. A mobile communication method comprising:
upon starting a carrier aggregation configured such that downlink data is distributed to a master radio base station and a secondary radio base station by a serving gateway device,
generating, by the master radio base station, a base key for secondary radio base station based on a parameter received from a mobility management node, and transmitting the base key for secondary radio base station to the secondary radio base station; and
generating, by the secondary radio base station, a communication key that is used for communication with a mobile station in the carrier aggregation, based on the base key for secondary radio base station.
